# EUROPEAN PATENT APPLICATION

(11) **EP 4 529 277 A1**
(43) Date of publication of application: **26.03.2025**
(21) Application number: 23203223.5
(22) Date of filing: 12.10.2023
(51) Int. Cl.: H04W 36/30, H04W 36/32, H04B 7/06, H04B 7/08, H04B 7/185, H04W 16/28, H04W 84/00, H04W 84/06

(54) **TECHNIQUE FOR COMMUNICATION CONNECTION ESTABLISHMENT BY A MOBILE UE USING A PHASED ARRAY ANTENNA**

(30) Priority: 21.09.2023 EP 23198896
(71) Applicant: Airbus S.A.S., 31700 Blagnac (FR); Technische Universität Hamburg, 21073 Hamburg (DE)
(72) Inventor: Meyerhoff, Thomas, 82024 Taufkirchen (DE); Shah, Aizaz, 21073 Hamburg (DE); Grünheid, Rainer, 21073 Hamburg (DE)
(74) Representative: Schornack, Oliver

(57) **Abstract**

Disclosed is a method performed by a mobile user equipment, UE, the method comprising: obtaining measurement information from a mobile phased array antenna, PAA, separate from the UE, the measurement information indicating, for at least one of a plurality of signals received by the PAA from a plurality of base stations, a received power, RP; determining, for the at least one of the signals, a quality measure based on the RP of said at least one of the signals; and transmitting, to a network node, a first message indicating the determined quality measure and enabling the network node to select at least one of the plurality of base stations as a target base station for a communication connection with the UE. A computer program, a UE and a system are also disclosed.

## Description

The present disclosure generally relates to a method performed by a user equipment, UE, a computer program, a UE and a system.

In various scenarios, it may be difficult to establish a communication connection between a UE and one of a plurality of available base stations. As a non-limiting example, in Direct Air to Ground communications (DATG) between a UE onboard an aircraft, referred to as aUE in the following, and base stations (BS) of a terrestrial mobile communication network (TMCN), the communication between the aUE and the TMCN may be handed over from a serving Base Station (BS) to another BS (also referred to as handover target or target base station in the following) as the aircraft moves along a flight trajectory towards its destination. In contrast to UEs on ground, an airborne aUE may experience significant amounts of interference caused by the transmission of other non-serving BSs in radio range.

The identification of a BS to which the communication of a UE is handed over may be performed by selecting the handover target according to, e.g., an average receive power observed by a UE that is obtained from a set of reference symbols embedded in a BSs transmit signal. In an LTE or 5G deployment scenario, a ground-based UE may be able to detect synchronization signals (SS) of a large number of BSs and compute the respective reference signal receiver power (RSRP) levels which are reported back to the TMCN by means of a measurement report. The TMCN may, in case of a conventional handover process, select a handover target based on the measurements report using a proprietary decision making process implemented by the network operator. In case of a conditional handover process, the potential handover target candidates may be notified to prepare for the handover and the decision to which of these candidates the handover will be performed may be made by the UE.

In general, it should be ensured that a UE is handed over to a BS with suitable signal strength. This procedure works well in noise limited environments. However, in DATG, an airborne aUE operates in an environment with strong interferences.

In view of the above and other problems, the present disclosure provides for a method, a UE, computer program and a system as defined in the appended claims.

According to a first aspect, a method performed by a mobile user equipment, UE, is provided. The method comprises obtaining measurement information from a mobile phased array antenna, PAA. The measurement information indicates, for at least one of a plurality of signals received by the PAA from a plurality of base stations, a received power, RP. The method comprises determining, for the at least one of the signals, a quality measure based on the RP of said at least one of the signals. The method comprises transmitting, to a network node, a first message indicating the determined quality measure and enabling the network node to select at least one of the plurality of base stations as a target base station for a communication connection with the UE.

The PAA and the UE may be co-located. The PAA and the UE may be configured to move in unison. The PAA and the UE may both be located onboard and/or fixedly installed on a same vehicle such as an aircraft or an automotive vehicle.

The PAA may be communicatively connected to the UE. The UE may be configured as a modem. The UE may be configured to relay user data traffic from a mobile end-user device (e.g., a mobile phone) towards one of the base stations with which the UE has an established communication connection.

Each of the plurality of signals may be received by the PAA from a different one of the plurality of base stations. The signals may be base station-specific (e.g., indicate an identifier and/or location of the respective base station).

The first message may configure the network node to select at least one of the plurality of base stations as a target base station. The first message may indicate the base station associated with the determined quality measure. For example, the first message includes an identifier of a base station and the determined quality measure, and optionally further includes an indication of an association of the identifier and the determined quality measure (e.g., in case more than one quality measure is included in the first message). This may allow the network node to select the at least one of the plurality of base stations based on the associated quality measure. The network node may be part of a core network (CN) such as a CN of a TMCN. The TMCN may comprise the plurality of base stations. The first message may be transmitted by the UE via the PAA to a base station (e.g., one of the plurality of base stations or another base station), for example to a base station having an established communication connection with the UE, and may be forwarded by said base station to the network node. The first message may be transmitted periodically.

The quality measure may be indicative of a degree of interference. The quality measure may be indicative of a degree of interference of the at least one of the signals by at least one of: {i} one or more other ones of the signals (e.g., signals of other base stations); {ii} further signals received by the PAA from signal-emitting entities, such as other UEs; {iii} noise. The quality measure may comprise a Signal to Interference and Noise power Ratio (SINR).

The method may further comprise obtaining location information indicative of locations at which the plurality of BSs are arranged. The location information may be obtained from the network node (e.g., via the established communication connection). The location information may be obtained from signals emitted (e.g., broadcasted) by one or more of the BSs. As a mere example, the location information may be broadcasted in a Master Information Block (OR) or System Information Block (SiB) or equivalent entities.

The method may comprise controlling the PAA to perform measurements with a beam configuration that is based on the location information. For example, the UE may configure the PAA with a beam configuration having a main beam that is directed to a location of one of the BSs as indicated by the location information.

The method may comprise deriving the RP for the at least one of the signals from the measurement information. Deriving the RP may comprise calibrating a measured signal strength of one or more or all of the received signals (e.g., relative to one another or relative to an absolute reference). The method may comprise deriving the RP for the at least one of the signals from the measurement information based on the location information. The RP may be derived from the measurement information further based on at least one spatial antenna gain of the PAA. The at least one spatial antenna gain may comprise one or both of {i} a spatial antenna gain of the PAA present when receiving one or more of the plurality of signals (e.g., with the PAA in a beam configuration or in an isotropic configuration) and {ii} a spatial antenna gain of the PAA in a beam configuration in which a main beam is directed towards one of the base stations.

The measurement information may indicate the RP for each of a plurality of beam configurations of the PAA with which beam configurations the signals were received by the PAA at different points in time (e.g., when performing a beam scanning procedure with the PAA for acquiring the measurement information). The quality measure may be determined for each of two or more of the plurality of beam configurations. The first message may be indicative of each determined quality measure.

As a mere example, for a given base station, only the quality measure with the largest value (e.g., a highest SINR) may be contained in the first message. The first message may comprise one value of the quality measure per base station. In other words, only one quality measure may be reported (e.g., for each base station measured with a specific beam pattern at the UE). The first message may indicate which of the base stations is associated with the largest value of the quality measure for a given beam pattern. The information about the beam pattern may not be transmitted in the first message.

The measurement information may indicate the RP for an isotropic configuration with which isotropic configuration the signals were received by the PAA.

The quality measure may be associated with correlation information comprising one or more of: {i} an identifier of the BS for which the quality measure was determined, {ii} an indication of a location of the BS for which the quality measure was determined, {iii} an indication of a direction of a main beam of a beam configuration of the PAA. The first message may indicate at least a part of the correlation information.

The method may further comprise receiving, from the network node, a second message indicating the at least one base station selected by the network node based on the first message. The second message may indicate correlation information associated with (e.g., the quality measure determined by the UE for) the selected at least one base station. The method may comprise establishing a (e.g., DATG) communication connection with one of the selected at least one base station and/or performing a handover procedure to one of the selected at least one base station. The method may comprise configuring the PAA with a beam configuration based on a location of one of the selected at least one station (e.g., as indicated by the second message and/or the location information). The method may comprise choosing (e.g., the) one of the selected at least one base station for establishing the communication connection and/or performing the handover.

For example, the quality measure is only determined for a subset of the plurality of base stations. Alternatively, or in addition, the first message may indicate the quality measure only for a subset of the plurality of base stations. The method may further comprise obtaining movement information indicative of a predicted movement of the UE and/or the PAA and/or the vehicle. The method may comprise defining the subset of the plurality of base stations based on the movement information.

According to a second aspect, a computer program is provided. The computer program comprises instructions which, when the program is executed by at least one processor, cause the at least one processor to carry out the method of the first aspect.

According to a third aspect, a user equipment, UE, is provided. The UE comprises at least one processor configured to carry out the method of the first aspect.

According to a fourth aspect, a system is provided. The system comprises the UE of the third aspect and the PAA. The system may further comprise one or more of the base stations.

Details of the present disclosure will now be described with reference to the Figures, wherein:
- Fig. 1: shows a system comprising a UE and a PAA, and a plurality of base stations;
- Fig. 2a-2b: illustrate signal paths between the system and the plurality of base stations with the PAA configured with a beam pattern;
- Fig. 3: illustrates signal paths between the system and the plurality of base stations with the PAA configured with an isotropic pattern;
- Fig. 4: illustrates signal paths between the system and the plurality of base stations with the PAA configured with a beam pattern.

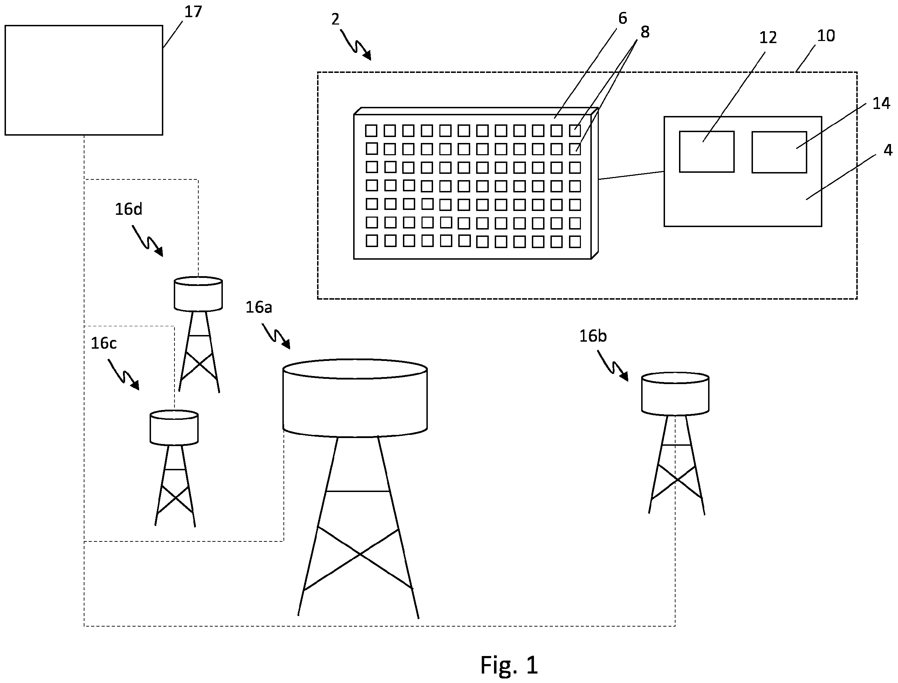

Fig. 1 shows a system 2 comprising a UE 4 communicatively connected to a PAA 6. The PAA comprises a plurality of antenna elements 8. The PAA may be a panel antenna array.

The PAA 6 is communicatively connected to the UE 4 (e.g., via a wired connection). Both the UE 4 and the PAA 6 are both mobile. The UE 4 and the PAA 6 may be co-located, for example in a same vehicle 10. The vehicle 10 may be a public transport vehicle such as an aircraft, a bus or train. The PAA 6 and the UE 4 may both be permanently installed in the vehicle 10. The UE may be configured as an aUE. The UE 4 may be configured as a modem for a handheld device of a passenger or crew of the vehicle.

The UE 4 comprises at least one processor 12 and at least one memory 14. The at least one memory 14 stores instructions that, when performed by the at least one processor 12, case the at least one processor 12 to carry out the method disclosed herein. The UE 4 may be configured to control the PAA 6.

Also shown in Fig. 1 are a plurality of BSs 16a-16d. The BSs 16a-16d may be part of different cells. The BSs are part of a TMCNs and are communicatively connected to a network node 17 of a core network of the TMCN. The BSs may be or comprise ground-based and/or stationary base stations. The BSs may be arranged at predefined locations. The PAA 6 and the UE 4 are mobile relative to one or more (e.g., all) of the BSs 16a-16d. A communication connection between the UE 4 and one of the BSs may be a DATG connection. The network node is configured to control communication connection establishment between the BSs 16a-16d and the UE 4 and a handover between the BSs 16a-16d.

The method performed by the UE 4 includes a step of obtaining measurement information from the PAA 6. The UE 4 may control the PAA 6 to perform the required measurement(s) so as to obtain the measurement information. The measurement information may be based on beam-based measurements(s) and/or isotropic measurement(s) of the PAA 6. For the beam-based measurement(s), the PAA 6 may be configured in a predefined beam configuration, in particular with a reception beam pattern. For the isotropic measurement(s), the PAA 6 may be configured with an isotropic reception pattern. In any case, the measurement information is indicative of a RP of at least one of a plurality of signals received by the PAA from the BS(s) 16a-16d. This means that the RP is either explicitly indicated in the measurement information (e.g., as an exact numerical value) or that the RP can be derived from the measurement information (e.g., by the UE 4). The signals received by the PAA 6 may comprise reference signals, RS. In this case, the RP of these respective signals may be a RSRP.

The method comprises determining, for the at least one of the signals, a quality measure based on the RP of said at least one of the signals. The quality measure may be a relative quality measure indicating a quality of the at least one of the signals relative to other signals or indicating a quality of a signal of a certain BS relative to signals of one or more other BSs. The quality measure may be indicative of a signal quality (e.g., of the at least one of the signals) in consideration of interference (e.g., from one or more other signals, for example one or more other signals received by the PAA 6). For example, a value of the quality measure may be higher in case of less interference and lower in case of more interference. The quality measure may comprise or be a Signal to Interference and Noise power Ratio, SINR.

The quality measure may be associated with correlation information comprising one or more of: {i} an identifier of the BS for which the quality measure was determined (e.g., derived by the UE 4 from the respective signal), {ii} an indication of a location of the BS for which the quality measure was determined (e.g., obtained from the UE 4 from one of the BSs 16-16d or stored by the UE 4 in advance), {iii} an indication of a direction of a main beam of a beam configuration with which the PAA received the signal for which the quality measure was determined (e.g., an angular direction).

The method further comprises transmitting, to the network node 17, a first message indicating the determined quality measure. This first message enables the network node 17 to select at least one of the plurality of base stations 16a-16d as a target base station for a communication connection with the UE 4. In other words, the network node 17 can select the at least one base station based on the determined quality measure obtained from the UE 4, which quality measure is based on signals that were not directly received by the UE 4 as such, but rather by the PAA 6. To the network node 17, the UE 4 acts like any user equipment capable of communicating with the BSs 16a-16d. In one implementation, the network node 17 is and/or remains agnostic of the UE 4 having obtained the measurements via the PAA 6.

The first message may be or comprise a measurement report indicative of the determined at least one quality measure. The measurement report may, in addition to the at least one quality measure, also indicate the associated correlation information. The method may comprise receiving, from the network node (e.g., via one of the plurality of base stations 16a-16d), in response to the measurement report, instructions for performing the establishment of the communication connection and/or for performing (e.g., participating in) the handover procedure. In case a conventional handover is to be performed, the instructions may indicate exactly one target BS. In case a conditional handover is to be performed, the instructions may comprise an indication of a plurality of (e.g., potential) target BSs, one of which is to be choosen by the UE 4 and/or instructions for the UE 4 to choose one target BS from the plurality of (e.g., potential) BSs 16a-16d.

The method may comprise configuring the PAA 6 with a beam configuration so as to form a main beam toward one of the selected BSs for establishing the communication connection with said BS. The PAA 6 in the beam configuration may also exhibit one or more side beams. It is possible to perform a handover procedure to one of the selected BSs 16a-16d. Performing such a handover procedure may comprise handing over a connection between the UE and a serving BS to another BS (e.g., the handover target BS). The handover may occur during movement of the UE, for example during flight of an aircraft in which the aUE is situated. The quality measure may be determined for each of two or more of the plurality of BSs and the communication connection may be established with or handed over to one of the two or more of the plurality of BSs (e.g., with the target BSs having, among the two or more BSs, a most preferable quality measure such as a quality measure with a highest value).

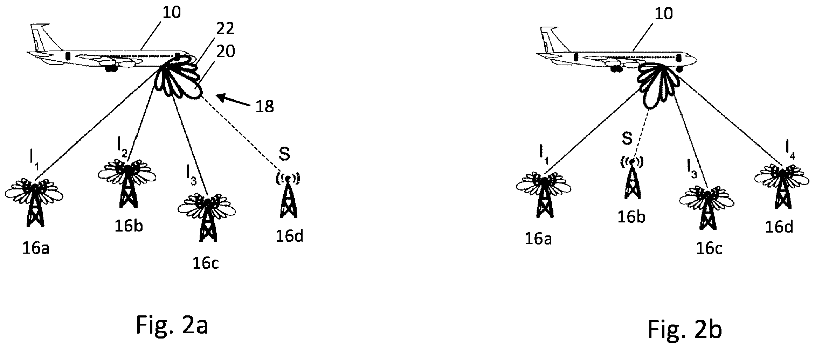

Fig. 2a and 2b paths of signals emitted by the base stations 16a-16d and receivable by the PAA 6. In both scenarios, the PAA 6 is configured with beam configuration resulting in a beam pattern 18 comprising a main beam 20 and a plurality of side beams 22. A communication connection may be set up between the UE 4 and a BS emitting a signal S that is received by the PAA 6 via the main beam 20. The beam pattern 18 differs between Fig. 2a and 2b. In Fig. 2a, the BS 16d may be selected and/or choosen as the target BS whereas in Fig. 2b, the BS 16b may be selected and/or choosen as the target BS. The remaining BSs 16a-16c in Fig. 2a and 16a, 16b-16c in Fig. 2b may then not participate in the communication with the UE 4 and, thus, may emit potentially interfering signals I₁-I₃ in Fig. 2a and I₁, I₃-I₄ in Fig. 2b. It can be seen that there are multiple possibilities for setting up a communication connection between the UE 4 and the BSs 16a-16d, for example by using the BS 16d or the BS 16b as the serving BS. The present technique may allow a suitable BS to be selected and/or choosen based on the measurements performed by the PAA 6.

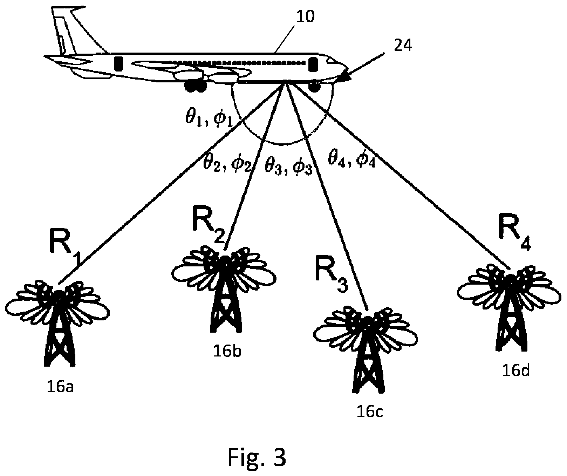

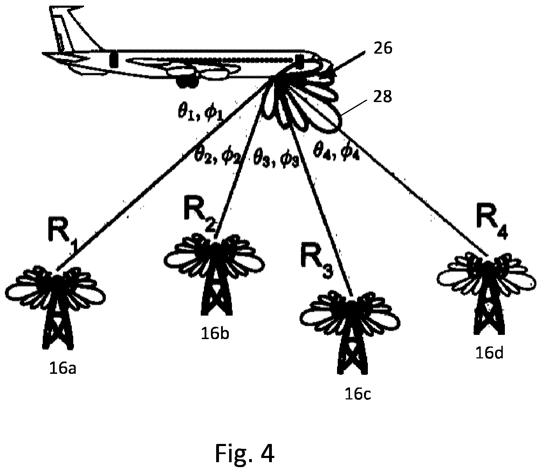

Two variants of the method performed by the UE 4 (e.g., in combination with the PAA 6) will now be explained in detail with reference to Figs. 2a-2b (first variant) and Figs. 3 and 4 (second variant).

### FIRST VARIANT

According to the first variant, measurements are performed with the PAA 6 in a beam configuration. For example, several measurements of the RP are performed with the PAA 6 in one particular beam configuration. Alternatively, or in addition, a plurality of measurements may be performed at different points in time, wherein the PAA 6 may be configured (e.g., by the UE 4) with a measurement-specific (e.g., unique) beam pattern 18 for each of the plurality of measurements. The latter approach may be generally referred to as beam scanning, as the direction of the main beam 20 differs between the beam configurations and, thus, varies over time.

In a first example of the beam scanning approach, the plurality of measurements are performed for all possible beam patterns with which the PAA 6 can be configured. It is thus possible to perform the plurality of measurements for all potential directions of the main beam 20 that can be provided by the PAA 6.

In a second example of the beam scanning approach, the plurality of measurements are performed only for beam patterns that result in main beams 20 directed towards one of the BSs 16a-16d. In this example, the UE 4 may use location information indicative of the locations of the BSs 16a-16d to select and/or determine the beam patterns to be used for the measurements.

In the beam scanning approach, the method may comprise periodically steering the main beam 20 of the PAA 6 such that a given area relative to the PAA 6, in particular an area having a respective BS 16a-16d located therein, is covered by the main beam 20.

The measurement information may indicate the RP for each of a plurality of beam configurations and/or main beam directions. The measurement information may (e.g., explicitly or implicitly) indicate the RP for each signal emitted by the plurality of BSs 16a-16d that is received by the PAA 6. The PAA 6 may periodically measure the RP of the signals received from each BA 16a-16d, for example by acquiring the RSRP from each base station's transmission signal.

The UE 4 may then associate each of these RPs with the beam configuration (e.g., theta and phi angles of the antenna's main beam 20) applied at the time of measurement, as part of the correlation information. The UE 4 may identify the BSs 16a-16d for example by decoding a BS identifier (e.g., a physical cell identifier) from the received signals (e.g., from primary and/or secondary synchronization blocks thereof) and associate the RPs with (e.g., the identifier and/or the location of) the BSs as part of the correlation information.

The UE 4 may determine, based on the measurement information, a maximum RP (e.g., and the associated theta and phi angles) for each BS, and may determine the RPs of all other BSs observed at the time at which the maximum RP was detected. In other words, the RPs of all signals received in a given beam configuration of the PAA 6 may be compared with one another and the maximum RP may be selected. The UE 4 may determine the SINR for the BS having said maximum RP. Specifically, the SINR can be determined for each BS form which a signal was received and measured to determine its RP, and optionally also for each beam pattern. For a given BS, the beam pattern with a maximum RP may be different from a beam pattern yielding the maximum SINR. Furthermore, the SINR may be determined as the selected maximum RP relative to the sum of the other RPs associated with the same beam configuration. That is, the method may comprise determining, based on a highest RP of a received signal as measured with the PAA 6 configured in a given beam pattern, and based on the RPs of other received signals measured with the PAA 6 configured in the given beam pattern, the SINR of the received signal. The quality measure may comprise or be an intra-beam-configuration SINR (e.g., a SINR determined exclusively based on measurements obtained with the PAA 6 configured with a given beam pattern). In the example of Fig. 2a, the SINR of the signal S may be determined based on the RP of S and based on the RPs of the signals I₁-I₃ as: SINR(S) = RP(S) / (RP(I₁)+RP(I₂)+RP(I₃)). The SINR(I₁), SINR(I₂) and SINR(I₃) may also be determined. The SINR may be determined for a plurality of BSs, for example for each BS, in particular when using the beam scanning approach. Only the largest SINR determined for a given BS (e.g., the BS 16d) and beam pattern 18 may be included in the first message. This means that only the largest SINR determined for a given BS may be used by the network node 17 for selecting and/or choosing a target BS. In the example of Fig. 2b, the SINR of the signal S may be determined based on the RP of S and based on the RPs of the signals I₁ and I₃-I₄ as: SINR(S) = RP(S) / (RP(I₁)+RP(I₃)+RP(I₄)). If the SINR(I₁), SINR(I₃), SINR(I₄) are smaller compared with SINR(S) in Fig. 2b, the BSs associated with these additional SINRs may be disregarded as target BS.

The method may comprise determining a plurality of maximum SINR values, each being associated with an identifier of a BS 16a-16d and the direction of the main beam 20 for which the maximum SINR value was determined. This plurality of maximum SINR values with the associated correlation information may then be transmitted to the network node 17 in the first message.

### SECOND VARIANT

According to the second variant, one or more measurements may be performed, wherein the PAA 6 may be configured (e.g., by the UE 4) in an isotropic configuration 24 for each of the one or more measurements. The isotropic configuration 24 may also be referred to as an omnidirectional configuration. In the isotropic configuration 24, the PAA 6 may be configured such that its antenna pattern matches as close as possible a pattern of an isotropic radiator.

The method may comprise determining, based on the one or more measurements, the RPs (e.g., RSRPs) of the BSs transmission signals received by the PAA 6 in the isotropic configuration 24. The UE 4 may identify the BSs 16a-16d for example by decoding a BS identifier (e.g., a physical cell identifier) from the received signals (e.g., from primary and/or secondary synchronization blocks thereof) and associate the RPs with (e.g., the identifier and/or the location of) the BSs as part of the correlation information.

The method may further comprise obtaining location information indicative of locations at which the plurality of BSs 16a-16d are arranged. The location information may be predefined and/or stored in the at least one memory of the UE 4. It is also possible for the UE 4 to obtain the location information from the network node 17 (e.g., via one or more of the BSs 16a-16d). For example, the method may comprise extracting the location information from (e.g., a 5G Service Information Block and/or a Master Information Block of) the signal(s) received from the BS(s) 16a-16d. The method may comprise determining a relative spatial relationship between the BSs 16a-16d and the UE 4 and/or the PAA 6 and/or the vehicle 10. The relative spatial relationship may comprise an angular location of the respective BS relative to the PAA 6 (e.g., indicated by a theta and a phi angle of the PAA 6).

The method may comprise deriving the (e.g., calibrated) RP to be used for establishing the communication connection from the measurement information based on the location information. Alternatively, or in addition, the method may comprise calibrating the RPs, determined based on the received signal, based on the location information. Calibrating the RPs may comprise multiplying each RP with an inverse of a location-dependent isotropic antenna gain of the PAA 6 in the isotropic configuration. The location-specific isotropic antenna gain may be referred to as angle-dependent isotropic gain or spatial gain of the PAA 6 in the isotropic configuration. In other words, the method may comprise calibrating the RPs determined based on the one or more measurements by multiplying each of the RPs with an isotropic antenna gain factor associated with the location of the BS for which transmission signal the respective RP was determined. The isotropic antenna gain factor may be associated with the relative spatial relationship between said BS and the PAA 6. If the isotropic antenna gain is approximately continuous across a predefined angular range, the measures RPs may be used without applying the isotropic antenna gain factor, i.e., the isotropic antenna gain may be disregarded.

Referring to Fig. 3, signals R₁-R₄ may be emitted by the BSs 16a-16d toward the PAA 6 in the isotropic configuration. The BSs 16a-16d in this example are arranged at locations indicated by theta and phi angles of the PAA 6, namely θ1, ϕ1 for BS 16a, θ2, ϕ2 for BS 16b, θ3, ϕ3 for BS 16c, and θ4, ϕ4 for BS 16d.

Generally speaking, in the second variant using the isotropic antenna configuration, the UE 4 may simulate the SINR based on the (e.g., calibrated) RPs and a spatial antenna gain that the PAA 6 would exhibit when configured in a beam configuration in which a main beam 28 is directed towards one of the base stations. The UE 4 may determine, based on the location information, for one or more of the BSs 16a-16d, a beam configuration resulting in a beam pattern 26 and/or a direction of a main beam 28 corresponding to the location of the respective BS 16a-16d. This is exemplarily illustrated in Fig. 4 for the BS 16d. The main beam 28 in this example points toward the BS 16d, namely into the direction indicated by the theta and phi angles θ4, ϕ4.

The UE 4 may determine an, based on the measurement results of the PAA 6 in the isotropic antenna configuration, an expected RP for a signal of the respective BS 16a-16d that would be present if the beam pattern 26 and/or the direction of the main beam 28 were applied. In the example of Fig. 4, an expected RP for each of the signals R1-R4 may be determined that would be present if the beam pattern 26 with the direction of the main beam 28 pointing towards the BS 16d were applied. The expected RP may be determined as a product of the (e.g., calibrated) RPs with a a spatial antenna gain that the PAA 6 would exhibit when applying the beam pattern 26. The spatial antenna gain when applying the beam pattern 26 may be referred to as angle-dependent or location-specific beam configuration gain of the PAA 6. In other words, the method may comprise determining expected RPs by multiplying each of the (e.g., calibrated) RPs with a beam pattern gain factor (e.g., indicated by the angle-dependent beam pattern gain) associated with the location of the BS for which transmission signal the respective (e.g., calibrated) RP was determined. The beam pattern gain factor may be associated with the relative spatial relationship between said BS and the PAA 6.

The UE 4 may determine an expected interference power level resulting from a summation of the RPs, the calibrated RPs or the expected RPs of all other BSs that would be present if the beam pattern 26 and/or the direction of the main beam 28 were applied. This may account for individual attenuation factors of the PAA 6 that are applicable to each (e.g., calibrated or expected) RP contributing to the interference power.

The UE 4 may determine the SINR for a transmission signal of the respective BS (in Fig. 4, the BS 16d) that would be present if the beam pattern 26 and/or the direction of the main beam 28 were applied. The SINR in this case can be calculated for the signal R₄ as SINR(R₄) = G(θ4, ϕ4)RP'(R₄) / (G(θ1, ϕ1)RP'(R₁) + G(θ2, ϕ2)RP'(R₂) + G(θ3, ϕ3)RP'(R₃)), wherein G represents the respective beam pattern gain factor of the PAA 6 associated with the main beam 28 pointing towards the BS 16d, and wherein RP' denotes the respective (e.g., calibrated) RP.

As in the first variant, the method may comprise determining a plurality of maximum SINR values, each being associated with an identifier of a BS 16a-16d and the direction of the main beam 28 for which the maximum SINR value was determined. In other words, a maximum SINR may be determined for each BS from which signals are received by the PAA 6. This plurality of maximum SINR values with the associated correlation information may then be transmitted to the one of the BSs in the measurement report.

Both the first and second variant can be used to yield a plurality of SINR estimates associated with an identifier of the BS for which the SINR estimate was obtained and the theta and phi angles of the PAA in direction to this BS. These SINR estimates may then be communicated to the network node 17, e.g. in the form of the measurement report, for either (i) the core network or (ii) in case of a conditional handover procedure the UE 4 to select the handover target with the most suitable (e.g., highest) SINR estimate.

The UE 4 may compare each determined SINR against a minimum SINR threshold. Those SINRs which fall below the SINR threshold may not be communicated to the network node 17 and, therefore, not be considered as handover targets. The UE 4 may consider its movement trajectory and exclude SINR values from the measurement report that are associated with BSs that will (e.g., within a predefined time period) no longer be in reach of the PAA 6 (e.g., exhibit a predefined minimum RP). This means that the network node 17 may not consider such excluded BSs as handover targets. The UE 4 may also save processing resources by not even determining the quality measure for such BSs.

The UE 4 may periodically transmit the measurement report to a serving BS (e.g., one of the BSs 16a-16d), which may then forward the report to the network node 17 and/or the core network of the TMCN. The measurement report may include one or more of RSRP, RSRQ and SINR values obtained from measurements of synchronization signals broadcasted by the BSs 16a-16d in radio range of the PAA 6. In one example, the determination of the SINR values may be shifted to the network node 17 by only providing the measured (e.g., calibrated and/or expected) RPs to the network node 17.

The network node 17 may evaluate the measurement report to select at least one target base station from the BSs 16a-16d to one of which an established communication connection with the UE 4 can be handed over. In case of a conventional handover, the network node 17 may determine exactly one target base station and inform the UE 4 of this target base station. In case of conditional handovers, the network node 17 may notify a set of target BSs obtained from the UE's measurement report, to prepare for a conditional handover. The handover in that case may be performed by the UE choosing the target BS (e.g., based on RSRP, RSRQ and/or SINR values in line with a given trigger condition (e.g., provided by the network node 17)) from a list of selected target BSs provided from the network node 17 to the UE 4 in response to the measurement report. This list may be generated by the network node 17 based on current usage of the BSs 16a-16d (e.g., by other UEs) and/or other criteria.

The SINR estimate of the selected handover target may implicitly account for the capability of the UE 4 to steer the main beam 20, 28 PAA 6 into the direction of corresponding BS using the theta and phi angles associated with the SINR estimate to amplify the signal of the handover target and attenuate the signals of all other BSs in radio range of the PAA 6.

The technique disclosed herein may enable selecting a handover target based on a maximum SINR determined based on measurement(s) performed by or via the PAA 6 communicatively connected to the UE 4. The technique may improve communication performance between the UE 4 and a BS 16-16d of a TMCN by providing the network operator with the means to select a handover target according to a SINR based optimization criterion, where the SINR values provided account for the capability of the UE 4 to steer the PAA 6 such that the signal component of the handover target is amplified and the signal components of all non-serving BSs in radio range are attenuated for improving the SINR. This approach may be particularly useful in interference limited environments such as DATG communication.

The technique enables using the PAA 6 communicatively connected to the UE 4 for searching a BS to which a communication connection can be handed over from a currently serving BS, such that a handover target with suitable SINR respectively communication performance can be determined. During the measurements, the PAA 6 may be controlled by the UE 4 such that the signal of the potential target BS is amplified and signals from other non-serving base stations are attenuated by the PAA 6. For instance, the signal of the target base station is amplified by the gain of the PAA's main beam 20, 28 and signals from other non-serving BSs are attenuated by the PAA side beams. Accordingly, a handover target may be selected based on an SINR criterion where the SINR is maximized by the capability of the PAA 6 at the UE's location to amplify the signal of a potential handover target and attenuate interference from other BSs in radio range. Maximizing the SINR is equivalent to maximizing communication performance. The PAA 6 can also be used for communications (e.g., via the established communication connection and/or with the target BS).

When using the beam scanning approach of the isotropic antenna configuration, the risk of not receiving signals from BSs that are potentially within reach of the PAA 6 can be minimized, as "blind areas" of the PAA 6 are reduced.

The location information not only helps to identify an antenna gain factor associated with the location of a BS from which a signal is received by the PAA, but may also be used in conjunction with movement information indicative of a predicted (e.g., planned) movement (e.g., a flight path) of the vehicle in which the UE 4 and the PAA 6 are located to exclude one or more of the BSs as potential target BSs. This may be done by the UE 4 (e.g., by not reporting quality measures of such BSs to the network node 17) or by the network node 17 (e.g., by not selecting such BSs as target BS).

Various modifications of the technique disclosed herein are possible. For example, the first variant of the method may be combined with the second variant (e.g., by performing beam-based measurements and isotropic measurements for determining the RPs). This may improve the reliability of the (e.g., calibrated and/or estimated and/or determined) RPs. Further modifications and advantages of the present disclosure may be apparent to those skilled in the art in view of the claims, description and figures.

## Claims

1. A method performed by a mobile user equipment, UE, (4) the method comprising:
obtaining measurement information from a mobile phased array antenna, PAA, (6), the measurement information indicating, for at least one of a plurality of signals (S, I1-I3) received by the PAA (6) from a plurality of base stations (16a-16d), a received power, RP;
determining, for the at least one of the signals (S; I1; I2; I3), a quality measure based on the RP of said at least one of the signals (S; I1; I2; I3); and
transmitting, to a network node, a first message indicating the determined quality measure and enabling the network node to select at least one of the plurality of base stations (16a-16d) as a target base station for a communication connection with the UE (4).

2. The method of claim 1, wherein the quality measure is indicative of a degree of interference.

3. The method of claim 1 or 2, wherein the quality measure comprises a Signal to Interference and Noise power Ratio, SINR.

4. The method of any one of claims 1 to 3, further comprising:
obtaining location information indicative of locations at which the plurality of BSs (16a-16d) are arranged; and
{i} controlling the PAA (6) to perform measurements with a beam configuration that is based on the location information and/or {ii} deriving the RP for the at least one of the signals from the measurement information based on the location information.

5. The method of claim 4, wherein the RP is derived from the measurement information further based on at least one spatial antenna gain of the PAA (6).

6. The method of claim 5, wherein the at least one spatial antenna gain comprises one or both of {i} a spatial antenna gain of the PAA (6) present when receiving one or more of the plurality of signals and {ii} a spatial antenna gain of the PAA (6) in a beam configuration in which a main beam (20) is directed towards one of the base stations (16a-16d).

7. The method of any one of claims 1 to 6, wherein the measurement information indicates the RP for each of a plurality of beam configurations of the PAA (6) with which beam configurations the signals were received by the PAA (6) at different points in time, and wherein the quality measure is determined for each of two or more of the plurality of beam configurations.

8. The method of any one of claims 1 to 6, wherein the measurement information indicates the RP for an isotropic configuration with which isotropic configuration the signals were received by the PAA (6).

9. The method of any one of claims 1 to 8, wherein the quality measure is associated with correlation information comprising one or more of: {i} an identifier of the BS (16a; 16b; 16c; 16d) for which the quality measure was determined, {ii} an indication of a location of the BS (16a; 16b; 16c; 16d) for which the quality measure was determined, {iii} an indication of a direction of a main beam (20) of a beam configuration of the PAA (6).

10. The method of any one of claims 1 to 9, further comprising:
receiving, from the network node, a second message indicating the at least one base station selected by the network node based on the first message; and
establishing a communication connection with one of the selected at least one base station and/or performing a handover procedure to one of the selected at least one base station.

11. The method of any one of claims 1 to 10, wherein the quality measure is only determined for a subset of the plurality of base stations (16a-16d) and/or wherein the first message indicates the quality measure only for a subset of the plurality of base stations (16a-16d).

12. The method of claim 11, further comprising:
obtaining movement information indicative of a predicted movement of the UE (4) and/or the PAA (6); and
defining the subset of the plurality of base stations (16a-16d) based on the movement information.

13. A computer program comprising instructions which, when the program is executed by at least one processor (12), cause the at least one processor (12) to carry out the method of claim any one of claims 1 to 12.

14. A user equipment, UE, (4) comprising at least one processor (12) configured to carry out the method of any one of claims 1 to 12.

15. A system (2) comprising:
the UE (4) of claim 14 and the PAA (6).
